# EUROPEAN PATENT APPLICATION

(11) **EP 3 671 473 A1**
(43) Date of publication of application: **24.06.2020**
(21) Application number: 19204526.8
(22) Date of filing: 22.10.2019
(51) Int. Cl.: G06F 12/14

(54) **A SCALABLE MULTI-KEY TOTAL MEMORY ENCRYPTION ENGINE**

(30) Priority: 20.12.2018 US 201816228222
(71) Applicant: Intel Corporation, Santa Clara, CA 95054 (US)
(72) Inventor: Shanbhogue, Vedvyas, Austin, TX 78738 (US); Van Doren, Stephen R., Portland, OR 97229 (US); Neiger, Gilbert, Portland, OR 97212-4242 (US); Huntley, Barry E., Hillsboro, OR 97124 (US); Santoni, Amy, Scottsdale, AZ 85255 (US); Makaram, Raghunandan, Northborough, MA 01532 (US); Agarwal, Rajat, Portland, OR 97229 (US); Perez, Ronald, Piedmont, CA 94618 (US); Khosravi, Hormuzd, Portland, OR 97229 (US); Peddireddy, Manjula, Santa Clara, CA 95054 (US); Chhabra, Siddhartha, Portland, OR 97229 (US)
(74) Representative: Samson & Partner Patentanwälte mbB

(57) **Abstract**

A processor includes a processor core to execute an application; a key attribute table (KAT) register to store a plurality of key identifiers (KeyIDs) associated with the application, wherein a KeyID identifies an encryption key; a selection circuit coupled to the KAT register to select the KeyID from the KAT register based on a KeyID selector (KSEL), wherein the KSEL is associated with a page of memory to which access is performed; a cache coupled to the processor core, the cache to store a physical address, data, and the KeyID of the page of memory, wherein the KeyID is an attribute associated with the page of memory; and a memory controller coupled to the cache to encrypt, based on the encryption key identified by the KeyID, the data of the page of memory stored in the cache as it is evicted from the cache to main memory.

## Description

### Technical Field

The present disclosure pertains to computer systems; more specifically, to protection of data stored in the memory of a computer system.

### Background

Computer systems, such as hardware systems and software systems that run on computers, often have undetected vulnerabilities that can be exploited by hardware or software attacks. For example, a side-channel attack can exploit a flaw in a computer hardware system to steal valuable data. An attacker implementing a side channel attack can gain information using physical access to a computing system. Other attacks can include malicious computer programs received over the internet or other communication networks. The attacks can include Trojans, viruses, worms, spyware, and other malware.

### Brief Description of the Drawings

Figure 1 is a high level block diagram of a system-on-a-chip with a scalable multi-key total memory encryption engine according to one implementation.
Figure 2 is a block diagram of a key identifier selection circuit according to one implementation.
Figure 3 is a block diagram of a system-on-a-chip with a scalable multi-key encryption engine according to one implementation.
Figure 4 is a flow diagram of an illustrative method for implementing a scalable multi-key total memory encryption engine.
Figure 5A is a block diagram illustrating an in-order pipeline and a register renaming stage, out-of-order issue/execution pipeline according to one implementation.
Figure 5B is a block diagram illustrating a micro-architecture for a processor or an integrated circuit that may implement hardware support for a multi-key cryptographic engine, according to an implementation of the disclosure.
Figure 6 illustrates a block diagram of the micro-architecture for a processor or an integrated circuit that implements hardware support for a multi-key cryptographic engine, according to an implementation of the disclosure.
Figure 7 is a block diagram of a computer system according to one implementation.
Figure 8 is a block diagram of a computer system according to another implementation.
Figure 9 is a block diagram of a system-on-a-chip according to one implementation.
Figure 10 illustrates another implementation of a block diagram for a computing system.
Figure 11 illustrates another implementation of a block diagram for a computing system.

### Detailed Description

An encryption engine may be used by a system to encrypt data as it is transferred from a processor to stored memory. In some encryption engines a single ephemeral key may be used to encrypt all data that is to be encrypted. In some encryption engines multiple keys may be used to encrypt different portions of memory differently. The use of multiple keys in an encryption engine may provide for encryption granularity at the page level; meaning that a key may be selected for each page of memory to be encrypted. A page of memory may be a fixed-length contiguous block of memory. In this way, memory used by one application may be accessible only by that application based on the encryption key, or keys, used to encrypt the memory accessed by the application.

In some instances, a key identifier (KeyID) may be used by the encryption engine to select the encryption key used by the encryption engine to encrypt a page of memory. To identify the encryption key to be used to encrypt or decrypt memory of a particular transaction, the KeyID may be embedded in the upper bits of the physical address of the page of memory. For example, to support 64 keys, six upper bits of the physical address must be used to uniquely identify the different keys, seven bits could be used to support 128 keys, etc. However, adding more keys can reduce the addressable physical memory of a platform because fewer bits can be used to address memory. Therefore, embedding the KeyID in the upper bits will not scale efficiently without shrinking memory of the platform. Additionally, when there are multiple ways to address a single physical address (e.g., 64 different upper key bit combinations for the same physical address), aliasing becomes an issue when caching the memory on the processor. An aliasing problem may occur when a given physical address is cached in a coherent domain with two or more different KeyIDs. A page of memory may be accessible by a first KeyID but is then made accessible by a second KeyID. If the cached blocks of memory of the page accessible by the first KeyID contain modifications they may be evicted and corrupt the cached blocks of memory of the page accessible by the second KeyID. To avoid the cache coherency issues associated with aliasing, the system must then resort to computationally intensive operations such as invalidating and flushing the entire cache. In addition to being computationally intensive, these operations burden performance of unrelated workloads because their cache lines get invalidated and flushed as well. Flushing also consumes memory bandwidth and may lead to further performance degradation.

Embodiments described herein may address the above deficiencies. An application, such as a virtual machine, may be assigned a subset of the keys supported by a platform on which it is executing. A platform may comprise a single system-on-a-chip (SOC), a single-processor system, or a multi-processor system, or the like. A SoC may include a processor or multiple processors. An application may be scheduled on one or more logical processors in the SOC. KeyIDs for each of the keys of the subset may be stored in a logical processor scoped register in the SoC. When a memory access request occurs from the application executing on a logical processor one of the KeyIDs may be selected from the logical processor scoped register to be associated with the physical address to be accessed. The block of memory accessed may be cached on the SoC. The KeyID may also be cached on the SoC as an attribute of the cached block of memory. Both the block of memory and the KeyID may be indexed by a tag, such as the physical address of the block of memory.

In one embodiment, a KeyID may be selected from a subset of all KeyIDs supported by a SoC when a memory access request occurs. For each memory access request, a set of bits called a key identifier selector (KSEL) may be used to select a KeyID from a key attribute table (KAT) register. There may be one KAT register associated with each logical processor, the KAT register being configured to hold the KeyIDs of the application scheduled to execute on the associated logical processor. A multiplexor may select the KeyID from the KAT register based on KSEL. KSEL may be associated with a physical page of memory and may be determined as part of a page walk. A page walk may be a multi-level page walk. For example, a first level page table may translate a guest linear address to a guest physical address (referred to as a first level page table) and a second level page table may translate a guest physical address to a host physical address (referred to as a second level page table). The KSEL may be obtained from the first or the second level page table. In some embodiments, the page table level that provides the KSEL may be configurable. In another embodiment, there may be a page table that is indexed using the host physical address and is used to provide the KSEL.

Once determined, the KSEL for the page may be stored in a translation lookaside buffer (TLB) and may be associated with all memory access requests for that page of memory. When an accessed block of memory is cached in the SoC after being accessed, the selected KeyID may be stored in a KeyID cache (KIC) of the SoC as an attribute of the block of memory. A block of memory may also be referred to as a cache line.

In another embodiment, the KSEL may be embedded in a linear address used by the application. A linear address may be a logical address used by an application for purposes of the processes executed by the application. A linear address may be indexed to a physical address in main memory. Main memory may refer to any off-chip memory storage. The KSEL may be stripped from the linear address and sent to the multiplexor used to select the KeyID. Because KeyIDs are not embedded in physical addresses the number of KeyIDs and encryption keys supported by the system is scalable. Embedding the KSEL in the linear address may also allow selection of a unique KeyID for each block of memory, or cache line, within a page of memory.

Additionally, the embodiments described herein may address the issue of aliasing that accompanies current methods. When a block of memory is to be accessed, if the block is cached in the SoC with a KeyID that is not the same KeyID that was selected from the KAT register, as above, then the block of memory, or cache line, may be evicted from the cache and any modifications written back to main memory. Then the block of memory may be retrieved from main memory and cached in the SoC as associated with the selected KeyID. Therefore, there can only be one block of memory indexed by a single physical address cached in the same coherent domain on the SoC at any given time. A coherent domain may be a domain of memory that contains consistent data across all caches and memory devices within that domain.

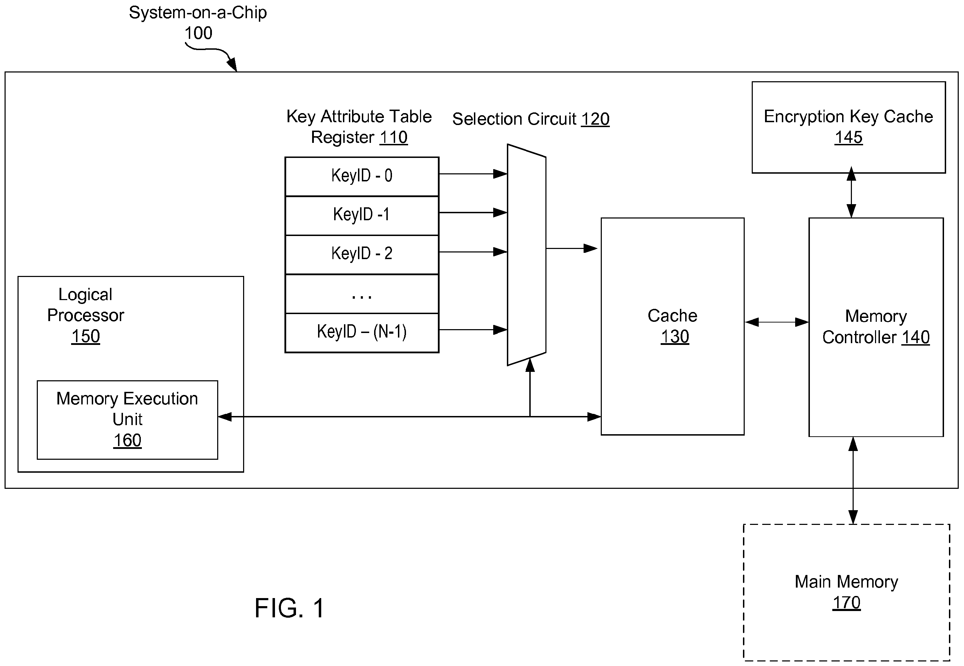

Figure 1 is a block diagram illustrating a SoC 100 comprising a KAT register 110, a selection circuit 120, and a cache 130. The selection circuit 120 selects a KeyID from the KAT register 110 to be cached in cache 130 as an attribute of a block of memory to which access is requested by a memory execution unit 160 of a logical processor 150. The selected KeyID may be transported along with the memory request to the cache 130 and the memory controller 140. The KeyID selected from the KAT register 110 may then be used by the memory controller 140 to select an encryption key to encrypt the block of memory when it is transferred from the SoC 100 to main memory 170. The KeyID may also be used to select the encryption key to decrypt the block of memory when retrieved from main memory 170 and stored within the SoC 100. Main memory 170 may be any off chip storage such as random access memory (RAM), dynamic RAM (DRAM) and non-volatile RAM.

KAT register 110 may store a plurality of KeyIDs that are associated with an application executing on the logical processor 150. The application may be any kind of application such as a web application, a desktop application, a browser application, a virtual machine, etc. The KeyIDs associated with the application may allow the application to encrypt and exclusively access the pages, and blocks, of memory used by the application. Each KeyID may identify an encryption key to be used by the memory controller 140 to encrypt and decrypt blocks of memory associated with the respective KeyID. The plurality of KeyIDs may be loaded into the KAT register 110 upon activation of the application on the logical processor 150.

The selection circuit 120 may be a multiplexor that selects one of the KeyIDs from the KAT register 110 based on a set of bits called a key identifier selector (KSEL). The KSEL may be a set of bits embedded in the upper bits of a linear address used by an application. The linear address may map to a physical address of the block of memory. The physical address may identify the physical location of a block of memory in main memory 170. The KSEL may be stripped from the linear address and sent by the memory execution unit 160 of the logical processor 150 to the selection circuit 120. KSEL may be carried by the load/store/code-fetches sent from the memory execution unit 160. The KeyID may then be selected from the KAT register 110 based on KSEL. The KeyID may then be stored in the cache 130 as an attribute of the block of memory accessed by the load/store/code-fetch that provided KSEL.

In an alternative embodiment, the KSEL may be stored in a page table. There may be multiple page tables, such as nested page tables or a dedicated table indexed by physical address to provide the KSEL. Which level of page table that provides the KSEL may be configurable. The KSEL may be stored in a page table as an attribute of the physical address of the page to which the linear address maps. Determining the physical address from the linear address may comprise consulting the page table to identify the mapping of the linear address to the physical address. Consulting a page table to determine a physical address from a linear address may be referred to as a page walk. The KSEL may then be determined as part of the page walk and retrieved along with the physical address. The KSEL determined from the page walk may be cached in a TLB. The KSEL may again be carried by the load/store/code-fetch used to access the block of memory located at the physical address.

The cache 130 may store blocks of memory that have been accessed by the logical processor 150. However, cached blocks of memory that have not been accessed within a certain period of time, or have been accessed infrequently may be evicted from the cache 130. Evicting a block of memory from the cache may comprise removing the block of memory from the cache 130. In some instances the block of memory may be written back to main memory 170 with any modifications that had been made to the block of memory while stored in the cache 130. Additionally, cache 130 may store a KeyID along with each block of memory stored in the cache 130. Therefore, each block of memory stored in the cache 130 may have a KeyID associated with it that may be used by the memory controller 140 to select an encryption key to encrypt the block of memory as it is evicted from the cache 130 and written to main memory 170.

Memory controller 140 may control memory accesses to main memory 170. Memory controller 140 may also comprise, or be coupled to, a total memory encryption (TME) engine to encrypt memory as it is transferred from the SoC 100 to main memory 170. Memory controller 140 may store, or have access to, a number of encryption keys used to encrypt blocks of memory. Memory controller 140 may also store a mapping of KeyIDs to associated encryption keys so that an encryption key may be identified by its associated KeyID. Logical processor 150 and memory execution unit 160 may control memory access requests, perform page walks to determine physical addresses, and transmit KSEL to the selection circuit 120 to select a KeyID.

Memory controller 140 may be coupled to an encryption key cache 145. Encryption key cache 145 may also be a part of the memory controller 140. Encryption key cache 145 may store encryption keys that are actively being used by the memory controller 140. Inactive keys may be stored in a region of main memory 170 reserved for storing encryption keys. Active keys that become inactive may be offloaded from the encryption key cache 145 to the reserved region of system memory 170. The reserved region of system memory 170 used to offload encryption keys from the encryption key cache 145 may be encrypted using an encryption key programmed into the TME engine.

In one embodiment, the encryption key cache 145 is hardware managed. The memory controller 140 may receive a memory access request with a KeyID. In response, the encryption key will be looked up in the encryption key cache 145 by the KeyID. If there is a miss (i.e. the key is not found) in looking up the encryption key then the memory controller 140 may select a victim of the encryption key cache 145 to evict and replace the evicted encryption key with the encryption key identified by the KeyID of the memory access request.

In one embodiment the encryption key cache 145 may be managed by software. The software may identify which keys are in use and which keys are dormant, or inactive. The software may send an instruction to the memory controller 140, or the encryption engine, to onload keys to the encryption key cache 145 that are in use and to offload keys that are inactive. The software may onload and offload keys based on a usage model defined by the software.

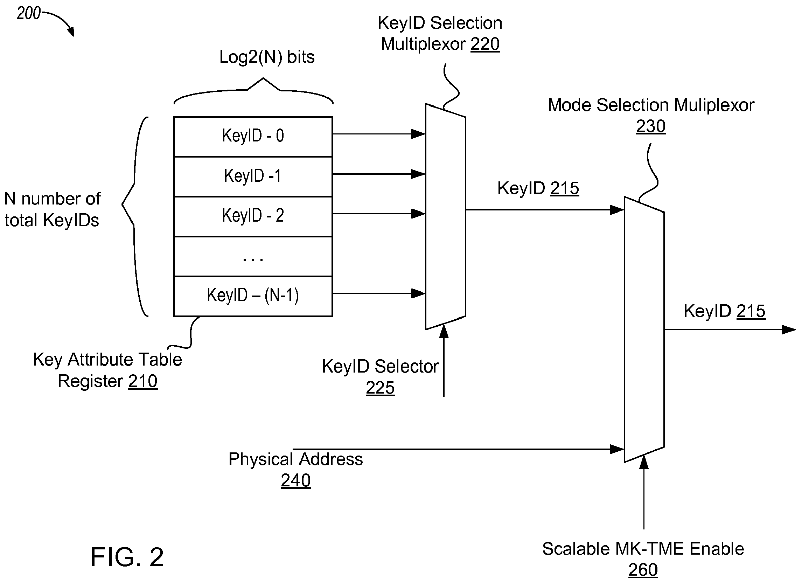

Figure 2 is a block diagram illustrating a KeyID selection circuit 200 to select a KeyID to be associated with a block of memory being accessed by a logical processor. KAT register 210 may store a number of KeyIDs that identify encryption keys accessible by an application executing on the logical processor. The KAT register 210 may be associated with the logical processor. The logical processor may be executing on a processor core. The KAT register 210 may store a subset of all encryption keys supported by the SoC on which it resides. The subset of KeyIDs stored in the KAT register 210 may be determined based on the application that is executing on the logical processor. Microcode may load the subset of KeyIDs into the KAT register 210 upon activation of the application on the logical processor executing on the processor core.

KeyID selection multiplexor 220 may be a hardware circuit coupled to the KAT register 210 to select the KeyID 215 for a block of memory to which the logical processor requests access. KeyID selection multiplexor 220 may receive a KeyID selector (KSEL) 225 as an input to select the KeyID 215. The KSEL 225 may be a set of bits stripped from the linear address associated with the memory access request.

Alternatively, KSEL may be determined as part of a page walk, after which KSEL may be cached in a translation lookaside buffer (TLB). A TLB may be a cache on the SoC used to store mappings of linear addresses to physical addresses from a page walk so they can quickly be retrieved without requiring another page walk. The number of bits comprising KSEL 225, as well as each KeyID, may be log₂(N), wherein N is the number of KeyIDs stored in the KAT register 210. Alternatively, the KAT register 210 may contain any number of entries and KeyID 215 and KSEL 225 may comprise any number of bits.

Mode selection multiplexor 230 may be a multiplexor that determines whether the processor should use the scalable MK-TME mode or to operate in a legacy mode. Scalable MK-TME enable 260 may be the input to mode selection multiplexor 230 to select whether scalable MK-TME mode is enabled or if the legacy mode is enabled. In legacy mode, the KeyIDs may be embedded in the physical address 240. A legacy mode may be required to support legacy software that has been enabled to work in the legacy mode. Mode selection may allow backward compatibility with legacy software while allowing newer software to operate in the scalable MK-TME mode. Scalable MK-TME enable 260 may be set by the BIOS at startup. Alternatively, the scalable MK-TME enable 260 may be selected by the operating system or a virtual machine manager.

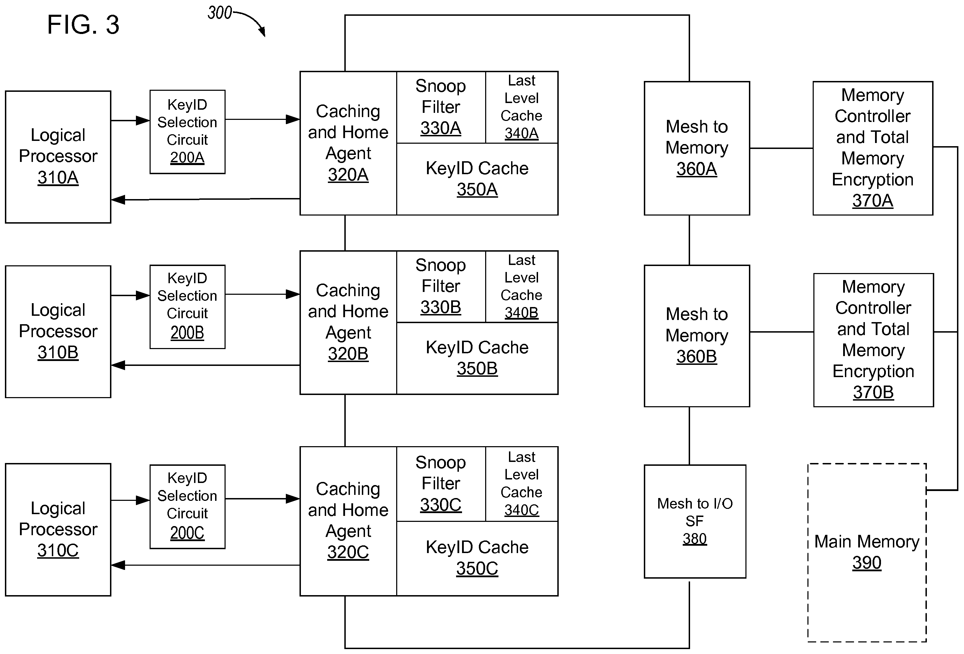

Figure 3 is a block diagram illustrating a SoC 300 utilizing one or more KeyID selection circuits 200A-C each associated with one or more logical processors 310A-C respectively, and one or more KeyID caches (KIC) 350A-C for storing KeyIDs associated with blocks of memory stored in a coherent domain of the SoC 300. The one or more logical processors 310A-C may execute on one or more processor cores. Each logical processor 310A-C may be coupled to a KeyID selection circuit 200A-C, detailed in Figure 2. Each logical processor may execute one or more applications. The application executed by a logical processor may be a virtual machine or any other type of software application.

The SoC 300 may include a "mesh" of interconnected memory devices that may communicate and coordinate with one another to coherently cache blocks of memory and metadata on the SoC 300. The memory devices may include a caching and home agent 320A-C, a snoop filter 330A-C, a last level cache 340A-C, and a KeyID cache (KIC) 350A-C. Caching and home agents 320A-C of the mesh may control communication between memory devices to coordinate coherent caching among the memory devices of the mesh. In one example, the memory devices of the mesh may be a coherent domain.

For example, caching and home agent 320A may contain logic to control the snoop filter 330A, the last level cache (LLC) 340A, and KIC 350A as well as communicate with caching and home agents 320B-C to determine what is cached within the memory devices controlled by caching and home agents 320B-C. Snoop filter 330A-C may be a data-less cache that stores the location of a block of memory stored on processor core side caches. The LLC 340A-C may store blocks of memory that have been accessed by any one of the logical processors. The LLC 340A-C may be the last cache within the SoC 300 in which blocks of memory may be stored before access to main memory 390 is required.

In one example, KIC 350A-C may store the KeyID of each block of memory stored within a coherent domain of the SoC 300. The KeyIDs stored in the KIC 350A-C may be indexed, and therefore determined, based on the physical address of the block of memory that the KeyID is associated with. In this way, each block of memory cached within the SoC 300 may be tagged with a KeyID identified by the block's physical address. The KIC 350A-C may be a physically separate cache or it may be integrated into the snoop filter 330A-C or the LLC 350A-C.

When the logical processor requests access to a block of memory, a KeyID may be selected from a KAT register in the KeyID selection circuit 200A-C. The caching and home agent 320A-C may determine if the block of memory is cached on the SoC 300 using the block's physical address as an identifier. The caching and home agent 320A-C may use the physical address to query the snoop filter, the last level cache, or both, to determine if the block of memory is cached on the SoC 300. If the physical address of the block of memory is identified as cached in the SoC 300 then the caching and home agent 320A-C may determine if the KeyID stored in the KIC 350A-C is the same KeyID that was selected by the KeyID selection circuit 200A-C. If the stored KeyID does not match the selected KeyID the block of memory may be removed from the cache and written back to main memory 390 with any modifications made while cached on the SoC 300. When moved from the SoC 300 to main memory 390 the block of memory may be encrypted by an encryption key identified by the KeyID that was stored in the KIC 350A-C. The block of memory may then be retrieved again and cached with the new selected KeyID as a tag or attribute. The KeyID may be stored in the KIC 350A-C and indexed by the physical address of the block of memory. In this way, only one block of memory for a physical address may be cached within the SoC 300 at one time.

The memory controller and total memory encryption engine (MC/TME) 370A-B may encrypt blocks of memory as they are removed from the SoC 300 and decrypt blocks as they are retrieved from main memory 390. The MC/TME 370A-B may encrypt or decrypt a block of memory using an encryption key identified by the KeyID associated with the block of memory. Each block of memory may be stored with the KeyID used to encrypt it. As described above, the KeyID may be stored in the KIC 350A-C. Upon a memory request in which a block of memory is retrieved from main memory 390, the MC/TME 370A-B may decrypt the block based on the KeyID stored with the block of memory. Mesh to memory 360A-B may be an interface between the mesh and the MC/TME 370A-B. Mesh to I/O SF 380 may be an interface between the mesh and input/output devices.

One advantage of caching each block of memory with a KeyID in the KIC 350A-C may be the implementation of a new instruction set architecture (ISA). An ISA may be defined to flush the cached blocks of memory that are stored with a specified KeyID. In this manner the operating system may oversubscribe the KeyID space with minimal impact to other applications in the platform. For example, a KeyID may be specified by software as a parameter to an instruction. The instruction may cause microcode to identify blocks of memory that are associated with the specified KeyID. A flush command may flush each block of memory identified by the microcode to main memory 390.

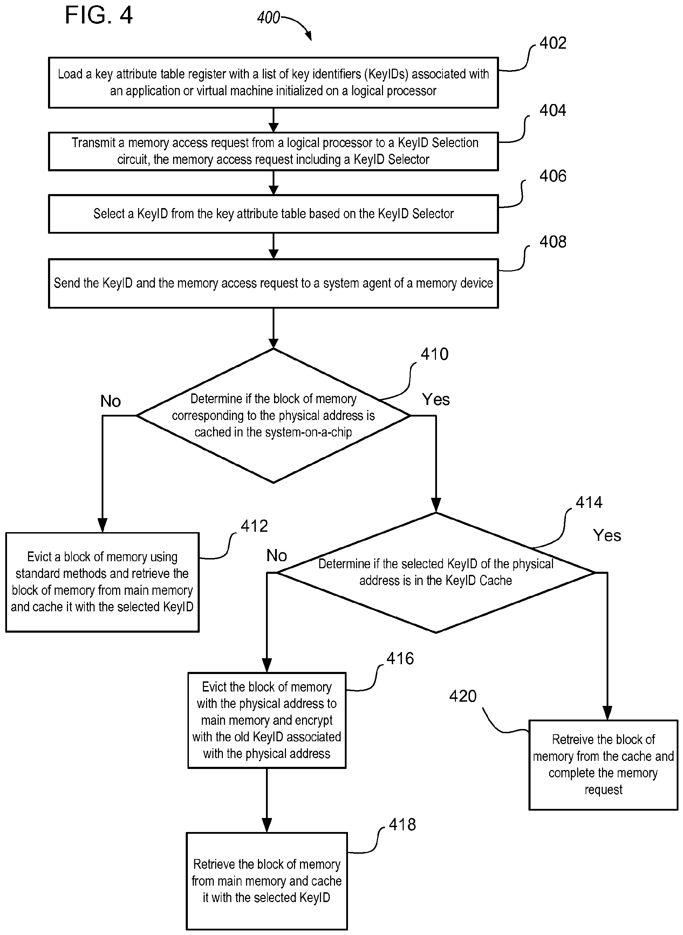

Figure 4 is a flow diagram illustrating an example method 400 of using a SoC with a scalable multi-key encryption engine. At block 402, a list of KeyIDs associated with an application or virtual machine may be loaded into a KAT register when the application or virtual machine is activated, or initialized, on a logical processor of a processor core. For example, a virtual machine may be assigned four keys, although the SoC may support a much larger number of keys. The four keys may be identified by four KeyIDs that are loaded into the KAT register when the virtual machine is activated.

At block 404, a memory access request may be transmitted from the processor core to a KeyID selection circuit comprising a multiplexor to select a KeyID from the KAT register. The memory access request may include a KeyID selector (KSEL). The KSEL may be stripped from the memory access request and input into the multiplexor. The KSEL may comprise a set of bits. KSEL may be determined by a page walk or may be embedded in a linear address.

At block 406, a KeyID may be selected from the KAT register based on the KSEL received from the memory request. The developer of the application may program KSEL to select appropriate encryption keys for encryption of application memory. The application may have access to N keys stored in the KAT register and the programming of KSEL will determine which of those N keys is used. Because KSEL is the selection input of the multiplexor which chooses from N keys, both the KeyIDs and KSEL may comprise log₂(N) bits. Alternatively, the KAT register 210 may contain any number of entries and KeyID 215 and KSEL 225 may comprise any number of bits. Furthermore, a fault may result if KSEL 225 is programmed with a value that selects an index that is not implemented in the KAT register 210.

At block 408, the KeyID and the memory access request may be sent to a system agent of a memory device. The memory device may be one of a number of interconnected memory devices. The system agent may control the caching of blocks of memory within the SoC. The memory access request may comprise a load/store/code-fetch including KSEL and the physical address of the block of memory to be accessed.

At block 410, it may be determined if the block of memory corresponding to the physical address of the memory access request is stored within the SoC. The system agent may determine, using the physical address of the memory access request, if the block of memory is cached within the SoC. The physical address may be a tag, or metadata, that is stored in association with a block of memory. The system agent may search a snoop filter containing the location of blocks of memory cached in core side caches. The system agent may also search a cache to determine if a block of memory with the physical address received by the system agent is stored in the cache.

At block 412, if it is determined at block 410 that the physical address is not found, meaning that the block of memory is not cached in the SoC, then the memory request may evict a block of memory stored in the cache according to an eviction procedure. A block of memory may be evicted if an eviction is required to make room in the cache for the new block of memory that is requested. If there are invalid entries in the cache then an eviction may not be required. The requested block of memory may then be retrieved from main memory and cached along with the KeyID selected at block 406. The KeyID may be stored in the KIC as an attribute, or tag, associated with the retrieved block of memory.

At block 414, if it is determined at block 412 that the physical address is cached in the SoC, then it may also be determined whether the KeyID selected at block 406 is the same KeyID as the KeyID stored as associated with the physical address. The KeyID may be an attribute, or tag, associated with the block of memory and may be identified by the physical address of the block of memory or any other tag associated with the block of memory.

At block 416, if it is determined at block 414 that the KeyID stored with the physical address is not the same KeyID as the KeyID selected with the memory access request, the block of memory may be evicted. At block 418, after evicting the block of memory at block 416, the block of memory may be retrieved from main memory and then cached in the SoC with the KeyID selected at block 406 as an attribute. At block 420, if it is determined at block 414 that the KeyID associated with the block of memory is the same KeyID as was selected at block 406, then the memory request may retrieve the block of memory from the cache and return it to the processor core.

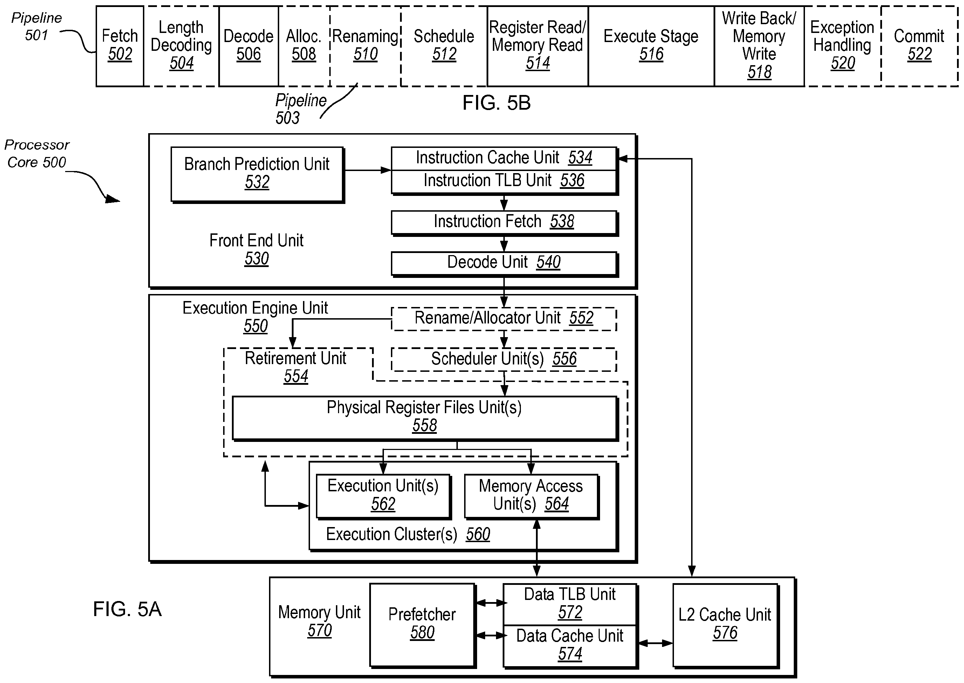

Figure 5A is a block diagram illustrating a micro-architecture for a processor 500 that implements hardware support for restricting usage of encryption keys by untrusted software, according to an implementation. Specifically, processor 500 depicts an in-order architecture core and a register renaming logic, out-of-order issue/execution logic to be included in a processor according to at least one implementation of the disclosure.

Processor 500 includes a front end unit 530 coupled to an execution engine unit 550, and both are coupled to a memory unit 570. The processor 500 may include a reduced instruction set computing (RISC) core, a complex instruction set computing (CISC) core, a very long instruction word (VLIW) core, or a hybrid or alternative core type. As yet another option, processor 500 may include a special-purpose core, such as, for example, a network or communication core, compression engine, graphics core, or the like. In one implementation, processor 500 may be a multi-core processor or may be part of a multi-processor system.

The front end unit 530 includes a branch prediction unit 532 coupled to an instruction cache unit 534, which is coupled to an instruction translation lookaside buffer (TLB) 536, which is coupled to an instruction fetch unit 538, which is coupled to a decode unit 540. The decode unit 540 (also known as a decoder) may decode instructions, and generate as an output one or more micro-operations, micro-code entry points, microinstructions, other instructions, or other control signals, which are decoded from, or which otherwise reflect, or are derived from, the original instructions. The decoder 540 may be implemented using various different mechanisms. Examples of suitable mechanisms include, but are not limited to, look-up tables, hardware implementations, programmable logic arrays (PLAs), microcode read only memories (ROMs), etc. The instruction cache unit 534 is further coupled to the memory unit 570. The decode unit 540 is coupled to a rename/allocator unit 552 in the execution engine unit 550.

The execution engine unit 550 includes the rename/allocator unit 552 coupled to a retirement unit 554 and a set of one or more scheduler unit(s) 556. The scheduler unit(s) 556 represents any number of different scheduler circuits, including reservations stations (RS), central instruction window, etc. The scheduler unit(s) 556 is coupled to the physical register set(s) unit(s) 558. Each of the physical register set(s) units 558 represents one or more physical register sets, different ones of which store one or more different data types, such as scalar integer, scalar floating point, packed integer, packed floating point, vector integer, vector floating point, etc., status (e.g., an instruction pointer that is the address of the next instruction to be executed), etc. The physical register set(s) unit(s) 558 is overlapped by the retirement unit 554 to illustrate various ways in which register renaming and out-of-order execution may be implemented (e.g., using a reorder buffer(s) and a retirement register set(s), using a future file(s), a history buffer(s), and a retirement register set(s); using a register maps and a pool of registers; etc.).

Generally, the architectural registers are visible from the outside of the processor or from a programmer's perspective. The registers are not limited to any known particular type of circuit. Various different types of registers are suitable as long as they are capable of storing and providing data as described herein. Examples of suitable registers include, but are not limited to, dedicated physical registers, dynamically allocated physical registers using register renaming, combinations of dedicated and dynamically allocated physical registers, etc. The retirement unit 554 and the physical register set(s) unit(s) 558 are coupled to the execution cluster(s) 560. The execution cluster(s) 560 includes a set of one or more execution units 562 and a set of one or more memory access units 564. The execution units 562 may perform various operations (e.g., shifts, addition, subtraction, multiplication) and operate on various types of data (e.g., scalar floating point, packed integer, packed floating point, vector integer, vector floating point).

While some implementations may include a number of execution units dedicated to specific functions or sets of functions, other implementations may include only one execution unit or multiple execution units that all perform all functions. The scheduler unit(s) 556, physical register set(s) unit(s) 558, and execution cluster(s) 560 are shown as being possibly plural because certain implementations create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register set(s) unit, and/or execution cluster - and in the case of a separate memory access pipeline, certain implementations are implemented in which only the execution cluster of this pipeline has the memory access unit(s) 564). It should also be understood that where separate pipelines are used, one or more of these pipelines may be out-of-order issue/execution and the rest in-order.

The set of memory access units 564 is coupled to the memory unit 570, which may include a data prefetcher 580, a data TLB unit 572, a data cache unit (DCU) 574, and a level 2 (L2) cache unit 576, to name a few examples. In some implementations DCU 574 is also known as a first level data cache (L1 cache). The DCU 574 may handle multiple outstanding cache misses and continue to service incoming stores and loads. It also supports maintaining cache coherency. The data TLB unit 572 is a cache used to improve virtual address translation speed by mapping virtual and physical address spaces. The data TLB unit 572 may be extended to cache KSEL, as described above. In one exemplary implementation, the memory access units 564 may include a load unit, a store address unit, and a store data unit, each of which is coupled to the data TLB unit 572 in the memory unit 570. The L2 cache unit 576 may be coupled to one or more other levels of cache and eventually to a main memory.

In one implementation, the data prefetcher 580 speculatively loads/prefetches data to the DCU 574 by automatically predicting which data a program is about to consume. Prefetching may refer to transferring data stored in one memory location (e.g., position) of a memory hierarchy (e.g., lower level caches or memory) to a higher-level memory location that is closer (e.g., yields lower access latency) to the processor before the data is actually demanded by the processor. More specifically, prefetching may refer to the early retrieval of data from one of the lower level caches/memory to a data cache and/or prefetch buffer before the processor issues a demand for the specific data being returned. The prefetching may be done using KSEL of an original request that trained the data prefetcher 580.

The processor 500 may support one or more instructions sets (e.g., the x86 instruction set (with some extensions that have been added with newer versions); the MIPS instruction set of Imagination Technologies of Kings Langley, Hertfordshire, UK; the ARM instruction set (with optional additional extensions such as NEON) of ARM Holdings of Sunnyvale, CA).

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated implementation of the processor also includes a separate instruction and data cache units and a shared L2 cache unit, alternative implementations may have a single internal cache for both instructions and data, such as, for example, a Level 1 (L1) internal cache, or multiple levels of internal cache. In some implementations, the system may include a combination of an internal cache and an external cache that is external to the core and/or the processor. Alternatively, all of the cache may be external to the core and/or the processor.

Figure 5B is a block diagram illustrating an in-order pipeline and a register renaming stage, out-of-order issue/execution pipeline implemented by processor 500 of Figure 5A according to some implementations of the disclosure. The solid lined boxes in Figure 5B illustrate an in-order pipeline 501, while the dashed lined boxes illustrate a register renaming, out-of-order issue/execution pipeline 503. In Figure 5B, the pipelines 501 and 503 include a fetch stage 502, a length decode stage 504, a decode stage 506, an allocation stage 508, a renaming stage 510, a scheduling (also known as a dispatch or issue) stage 512, a register read/memory read stage 514, an execute stage 516, a write back/memory write stage 518, an exception handling stage 522, and a commit stage 524. In some implementations, the ordering of stages 502-524 may be different than illustrated and are not limited to the specific ordering shown in Figure 5B.

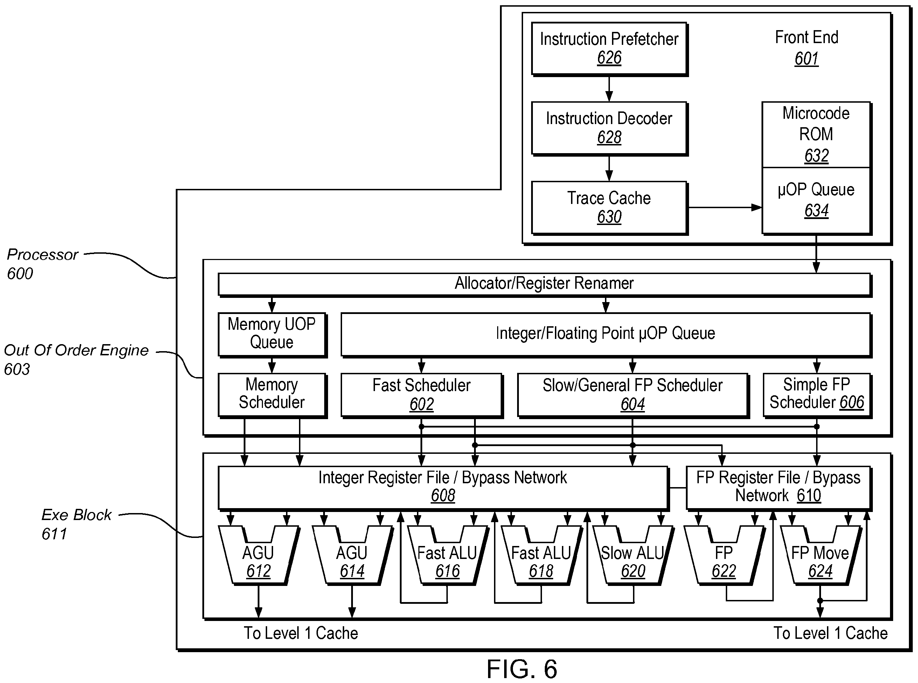

Figure 6 illustrates a block diagram of the micro-architecture for a processor 600 that includes logic circuits of a processor or an integrated circuit that implements hardware support for restricting usage of encryption keys by untrusted software, according to an implementation of the disclosure. In some implementations, an instruction in accordance with one implementation can be implemented to operate on data elements having sizes of byte, word, doubleword, quadword, etc., as well as datatypes, such as single and double precision integer and floating point datatypes. In one implementation the in-order front end 601 is the part of the processor 600 that fetches instructions to be executed and prepares them to be used later in the processor pipeline. The implementations of the page additions and content copying can be implemented in processor 600.

The front end 601 may include several units. In one implementation, the instruction prefetcher 616 fetches instructions from memory and feeds them to an instruction decoder 618 which in turn decodes or interprets them. The prefetching may be done using the KSEL of an original demand request that trained the instruction prefetcher 616. For example, in one implementation, the decoder decodes a received instruction into one or more operations called "micro-instructions" or "micro-operations" (also called micro op or uops) that the machine can execute. In other implementations, the decoder parses the instruction into an opcode and corresponding data and control fields that are used by the micro-architecture to perform operations in accordance with one implementation. In one implementation, the trace cache 630 takes decoded uops and assembles them into program ordered sequences or traces in the uop queue 634 for execution. When the trace cache 630 encounters a complex instruction, microcode ROM (or RAM) 632 provides the uops needed to complete the operation.

Some instructions are converted into a single micro-op, whereas others need several micro-ops to complete the full operation. In one implementation, if more than four micro-ops are needed to complete an instruction, the decoder 618 accesses the microcode ROM 632 to do the instruction. For one implementation, an instruction can be decoded into a small number of micro ops for processing at the instruction decoder 618. In another implementation, an instruction can be stored within the microcode ROM 632 should a number of micro-ops be needed to accomplish the operation. The trace cache 630 refers to an entry point programmable logic array (PLA) to determine a correct micro-instruction pointer for reading the micro-code sequences to complete one or more instructions in accordance with one implementation from the micro-code ROM 632. After the microcode ROM 632 finishes sequencing micro-ops for an instruction, the front end 601 of the machine resumes fetching micro-ops from the trace cache 630.

The out-of-order execution engine 603 is where the instructions are prepared for execution. The out-of-order execution logic has a number of buffers to smooth out and reorder the flow of instructions to optimize performance as they go down the pipeline and get scheduled for execution. The allocator logic allocates the machine buffers and resources that each uop needs in order to execute. The register renaming logic renames logic registers onto entries in a register set. The allocator also allocates an entry for each uop in one of the two uop queues, one for memory operations and one for non-memory operations, in front of the instruction schedulers: memory scheduler, fast scheduler 602, slow/general floating point scheduler 604, and simple floating point scheduler 606. The uop schedulers 602, 604, 606, determine when a uop is ready to execute based on the readiness of their dependent input register operand sources and the availability of the execution resources the uops need to complete their operation. The fast scheduler 602 of one implementation can schedule on each half of the main clock cycle while the other schedulers can only schedule once per main processor clock cycle. The schedulers arbitrate for the dispatch ports to schedule uops for execution.

Register sets 608, 610, sit between the schedulers 602, 604, 606, and the execution units 612, 614, 616, 618, 620, 622, 624 in the execution block 611. There is a separate register set 608, 610, for integer and floating point operations, respectively. Each register set 608, 610, of one implementation also includes a bypass network that can bypass or forward just completed results that have not yet been written into the register set to new dependent uops. The integer register set 608 and the floating point register set 610 are also capable of communicating data with the other. For one implementation, the integer register set 608 is split into two separate register sets, one register set for the low order 32 bits of data and a second register set for the high order 32 bits of data. The floating point register set 610 of one implementation has 128 bit wide entries because floating point instructions typically have operands from 64 to 128 bits in width.

The execution block 611 contains the execution units 612, 614, 616, 618, 620, 622, 624, where the instructions are actually executed. This section includes the register sets 608, 610, that store the integer and floating point data operand values that the micro-instructions need to execute. The processor 600 of one implementation is comprised of a number of execution units: address generation unit (AGU) 612, AGU 614, fast ALU 616, fast ALU 618, slow ALU 620, floating point ALU 612, floating point move unit 614. For one implementation, the floating point execution blocks 612, 614, execute floating point, MMX, SIMD, and SSE, or other operations. The floating point ALU 612 of one implementation includes a 64 bit by 64 bit floating point divider to execute divide, square root, and remainder micro-ops. For implementations of the disclosure, instructions involving a floating point value may be handled with the floating point hardware.

In one implementation, the ALU operations go to the high-speed ALU execution units 616, 618. The fast ALUs 616, 618, of one implementation can execute fast operations with an effective latency of half a clock cycle. For one implementation, most complex integer operations go to the slow ALU 620 as the slow ALU 620 includes integer execution hardware for long latency type of operations, such as a multiplier, shifts, flag logic, and branch processing. Memory load/store operations are executed by the AGUs 622, 624. For one implementation, the integer ALUs 616, 618, 620, are described in the context of performing integer operations on 64 bit data operands. In alternative implementations, the ALUs 616, 618, 620, can be implemented to support a variety of data bits including 16, 32, 128, 256, etc. Similarly, the floating point units 622, 624, can be implemented to support a range of operands having bits of various widths. For one implementation, the floating point units 622, 624, can operate on 128 bits wide packed data operands in conjunction with SIMD and multimedia instructions.

In one implementation, the uops schedulers 602, 604, 606, dispatch dependent operations before the parent load has finished executing. As uops are speculatively scheduled and executed in processor 600, the processor 600 also includes logic to handle memory misses. If a data load misses in the data cache, there can be dependent operations in flight in the pipeline that have left the scheduler with temporarily incorrect data. A replay mechanism tracks and re-executes instructions that use incorrect data. Only the dependent operations need to be replayed and the independent ones are allowed to complete. The schedulers and replay mechanism of one implementation of a processor are also designed to catch instruction sequences for text string comparison operations.

The term "registers" may refer to the on-board processor storage locations that are used as part of instructions to identify operands. In other words, registers may be those that are usable from the outside of the processor (from a programmer's perspective). However, the registers of an implementation should not be limited in meaning to a particular type of circuit. Rather, a register of an implementation is capable of storing and providing data, and performing the functions described herein. The registers described herein can be implemented by circuitry within a processor using any number of different techniques, such as dedicated physical registers, dynamically allocated physical registers using register renaming, combinations of dedicated and dynamically allocated physical registers, etc. In one implementation, integer registers store 32-bit integer data. A register set of one implementation also contains eight multimedia SIMD registers for packed data.

For the discussions herein, the registers are understood to be data registers designed to hold packed data, such as 64 bits wide MMX™ registers (also referred to as 'mm' registers in some instances) in microprocessors enabled with MMX technology from Intel Corporation of Santa Clara, California. These MMX registers, available in both integer and floating point forms, can operate with packed data elements that accompany SIMD and SSE instructions. Similarly, 128 bits wide XMM registers relating to SSE2, SSE3, SSE4, or beyond (referred to generically as "SSEx") technology can also be used to hold such packed data operands. In one implementation, in storing packed data and integer data, the registers do not need to differentiate between the two data types. In one implementation, integer and floating point are either contained in the same register set or different register sets. Furthermore, in one implementation, floating point and integer data may be stored in different registers or the same registers.

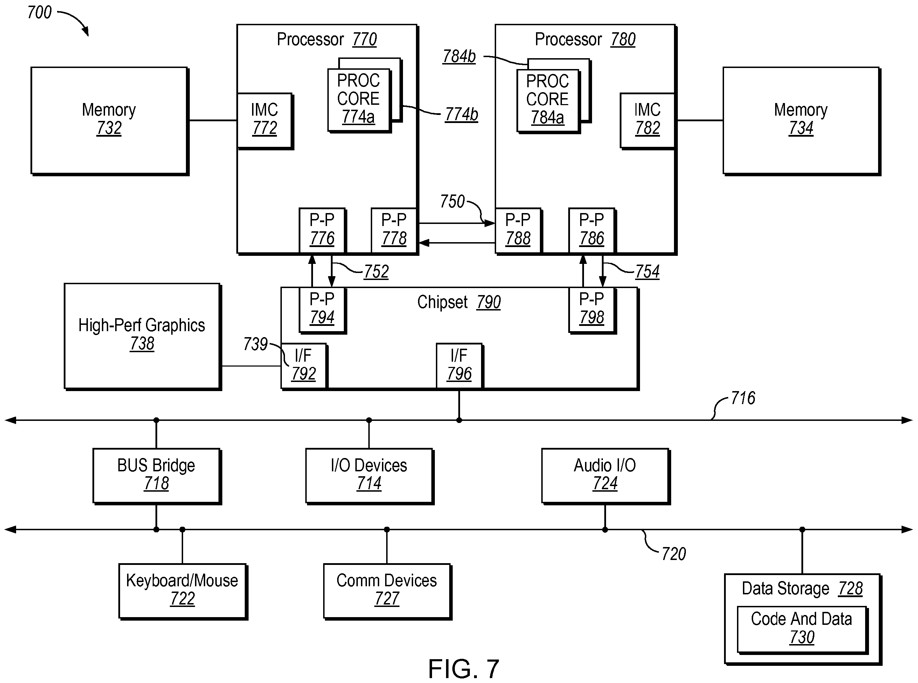

Implementations may be implemented in many different system types. Referring now to Figure 7, shown is a block diagram of a multiprocessor system 700 that may implement hardware support for restricting usage of encryption keys by untrusted software, in accordance with an implementation. As shown in Figure 7, multiprocessor system 700 is a point-to-point interconnect system, and includes a first processor 770 and a second processor 780 coupled via a point-to-point interconnect 750. As shown in Figure 7, each of processors 770 and 780 may be multicore processors, including first and second processor cores (i.e., processor cores 774a and 774b and processor cores 784a and 784b), although potentially many more cores may be present in the processors. While shown with two processors 770, 780, it is to be understood that the scope of the disclosure is not so limited. In other implementations, one or more additional processors may be present in a given processor.

Processors 770 and 780 are shown including integrated memory controller units 772 and 782, respectively. Processor 770 also includes as part of its bus controller units point-to-point (P-P) interfaces 776 and 788; similarly, second processor 780 includes P-P interfaces 786 and 788. Processors 770, 780 may exchange information via a point-to-point (P-P) interface 750 using P-P interface circuits 778, 788. As shown in Figure 7, IMCs 772 and 782 couple the processors to respective memories, namely a memory 732 and a memory 734, which may be portions of main memory locally attached to the respective processors.

Processors 770, 780 may exchange information with a chipset 790 via individual P-P interfaces 752, 754 using point to point interface circuits 776, 794, 786, 798. Chipset 790 may also exchange information with a high-performance graphics circuit 738 via a high-performance graphics interface 739.

Chipset 790 may be coupled to a first bus 716 via an interface 796. In one implementation, first bus 716 may be a Peripheral Component Interconnect (PCI) bus, or a bus such as a PCI Express bus or interconnect bus, although the scope of the disclosure is not so limited.

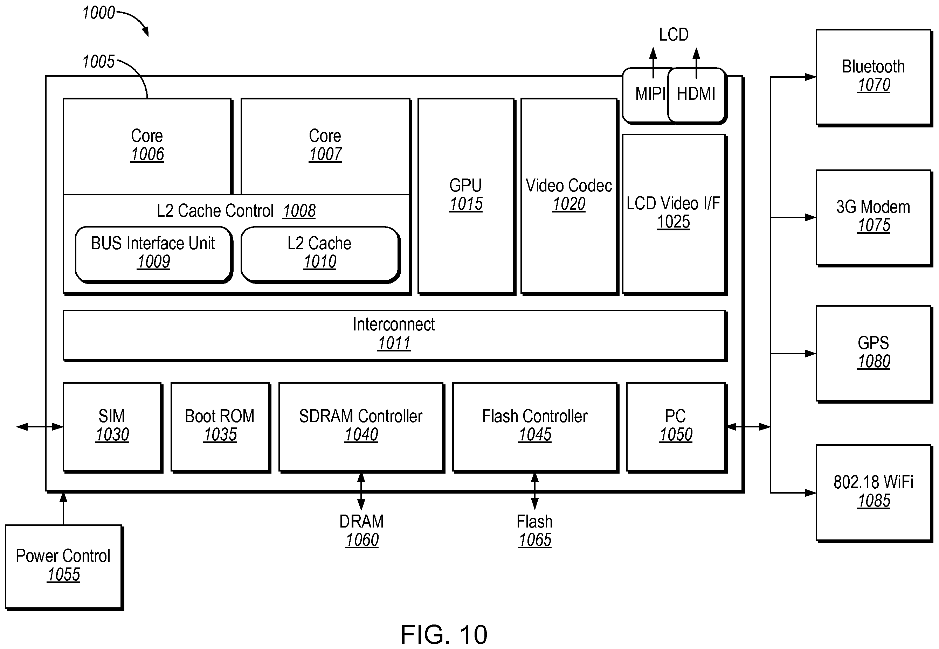

Referring now to Figure 10, shown is a block diagram of a third system 1000 that may implement hardware support for restricting usage of encryption keys by untrusted software, in accordance with an implementation of the disclosure. Like elements in Figures 7 and 10 bear like reference numerals and certain aspects of Figure 10 have been omitted from Figure 7 in order to avoid obscuring other aspects of Figure 7.

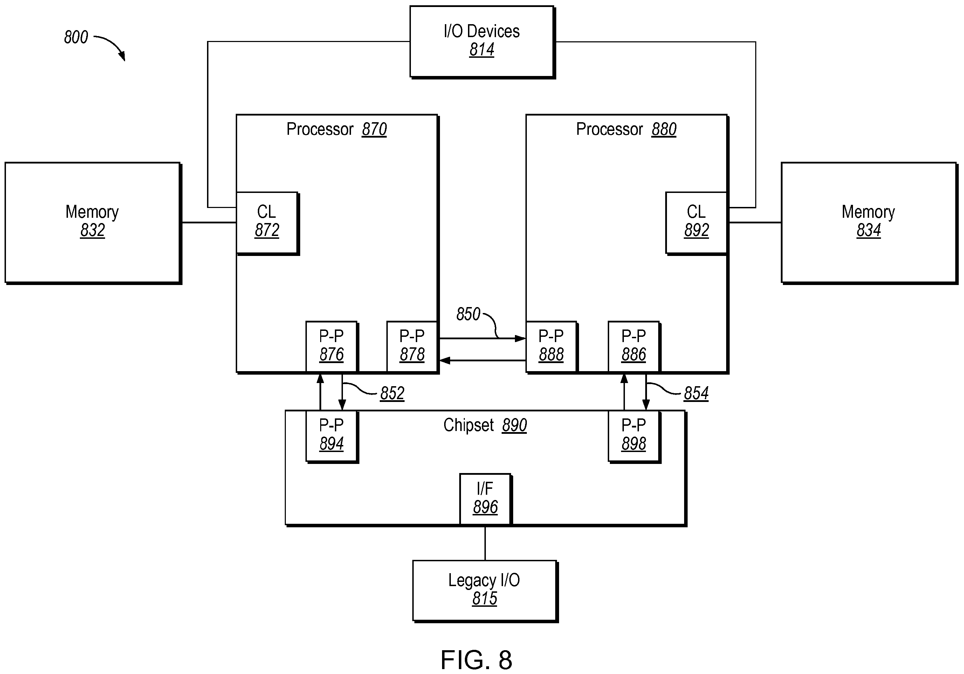

Figure 8 illustrates that the processors 870, 880 may include integrated memory and I/O control logic ("CL") 872 and 892, respectively. For at least one implementation, the CL 872, 882 may include integrated memory controller units such as described herein. In addition. CL 872, 892 may also include I/O control logic. Figure 8 illustrates that the memories 832, 834 are coupled to the CL 872, 892, and that I/O devices 814 are also coupled to the control logic 872, 892. Legacy I/O devices 815 are coupled to the chipset 890.

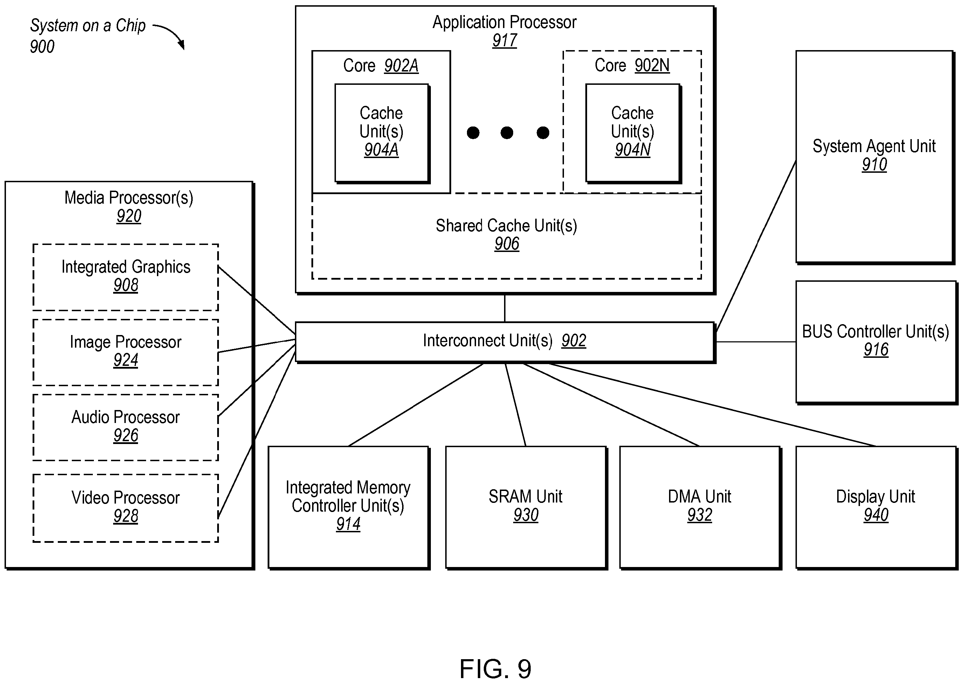

Figure 9 is an exemplary system on a chip (SoC) 900 that may include one or more of the cores 902A ...902N that may implement hardware support for restricting usage of encryption keys by untrusted software. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Within the exemplary SoC 900 of Figure 9, dashed lined boxes are features on more advanced SoCs. An interconnect unit(s) 902 may be coupled to: an application processor 917 which includes a set of one or more cores 902A-N and shared cache unit(s) 906; a system agent unit 910; a bus controller unit(s) 916; an integrated memory controller unit(s) 914; a set of one or more media processors 920 which may include integrated graphics logic 908, an image processor 924 for providing still and/or video camera functionality, an audio processor 926 for providing hardware audio acceleration, and a video processor 928 for providing video encode/decode acceleration; a static random access memory (SRAM) unit 930; a direct memory access (DMA) unit 932; and a display unit 940 for coupling to one or more external displays.

Turning next to Figure 10, an implementation of a system on-chip (SoC) design that may implement hardware support for restricting usage of encryption keys by untrusted software, in accordance with implementations of the disclosure is depicted. As an illustrative example, SoC 1000 is included in user equipment (UE). In one implementation, UE refers to any device to be used by an end-user to communicate, such as a hand-held phone, smartphone, tablet, ultra-thin notebook, notebook with broadband adapter, or any other similar communication device. A UE may connect to a base station or node, which can correspond in nature to a mobile station (MS) in a GSM network. The implementations of the page additions and content copying can be implemented in SoC 1000.

Here, SoC 1000 includes 2 cores-1006 and 1007. Similar to the discussion above, cores 1006 and 1007 may conform to an Instruction Set Architecture, such as a processor having the Intel® Architecture Core™, an Advanced Micro Devices, Inc. (AMD) processor, a MIPS-based processor, an ARM-based processor design, or a customer thereof, as well as their licensees or adopters. Cores 1006 and 1007 are coupled to cache control 1008 that is associated with bus interface unit 1009 and L2 cache 1010 to communicate with other parts of system 1000. Interconnect 1011 includes an on-chip interconnect, such as an IOSF, AMBA, or other interconnects discussed above, which can implement one or more aspects of the described disclosure.

In one implementation, SDRAM controller 1040 may connect to interconnect 1011 via cache 1010. Interconnect 1011 provides communication channels to the other components, such as a Subscriber Identity Module (SIM) 1030 to interface with a SIM card, a boot ROM 1035 to hold boot code for execution by cores 1006 and 1007 to initialize and boot SoC 1000, a SDRAM controller 1040 to interface with external memory (e.g. DRAM 1060), a flash controller 1045 to interface with non-volatile memory (e.g. Flash 1065), a peripheral control 1050 (e.g. Serial Peripheral Interface) to interface with peripherals, video codecs 1020 and Video interface 1025 to display and receive input (e.g. touch enabled input), GPU 1015 to perform graphics related computations, etc. Any of these interfaces may incorporate aspects of the implementations described herein.

In addition, the system illustrates peripherals for communication, such as a Bluetooth® module 1070, 3G modem 1075, GPS 1080, and Wi-Fi® 1085. Note as stated above, a UE includes a radio for communication. As a result, these peripheral communication modules may not all be included. However, in a UE some form of a radio for external communication should be included.

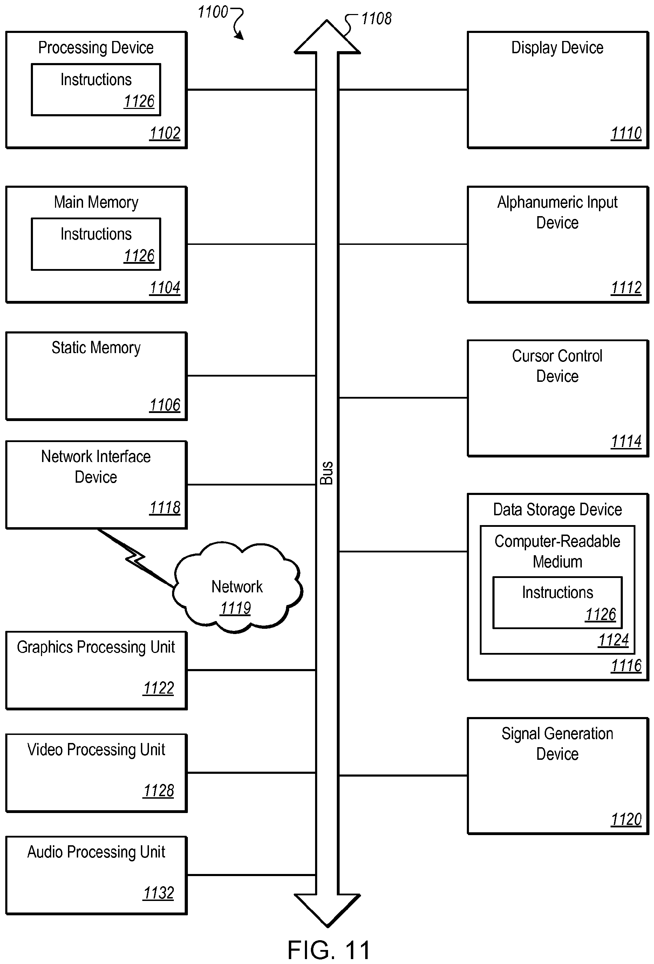

Figure 11 illustrates a diagrammatic representation of a machine in the example form of a computing system 1100 within which a set of instructions, for causing the machine to implement hardware support for restricting usage of encryption keys by untrusted software according any one or more of the methodologies discussed herein. In alternative implementations, the machine may be connected (e.g., networked) to other machines in a LAN, an intranet, an extranet, or the Internet. The machine may operate in the capacity of a server or a client device in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. The implementations of the page additions and content copying can be implemented in computing system 1100.

The computing system 1100 includes a processing device 1102, main memory 1104 (e.g., flash memory, dynamic random access memory (DRAM) (such as synchronous DRAM (SDRAM) or DRAM (RDRAM), etc.), a static memory 1106 (e.g., flash memory, static random access memory (SRAM), etc.), and a data storage device 1116, which communicate with each other via a bus 1108.

Processing device 1102 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 1102 may also be one or more special-purpose processing devices such as an application-specific integrated circuit (ASIC), a field programmable gate array (FPGA), a digital signal processor (DSP), network processor, or the like. In one implementation, processing device 1102 may include one or more processor cores. The processing device 1102 is configured to execute the processing logic 1126 for performing the operations discussed herein.

In one implementation, processing device 1102 can be part of a processor or an integrated circuit that includes the disclosed LLC caching architecture. Alternatively, the computing system 1100 can include other components as described herein. It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

The computing system 1100 may further include a network interface device 1118 communicably coupled to a network 1119. The computing system 1100 also may include a video display device 1110 (e.g., a liquid crystal display (LCD) or a cathode ray tube (CRT)), an alphanumeric input device 1112 (e.g., a keyboard), a cursor control device 1114 (e.g., a mouse), a signal generation device 1120 (e.g., a speaker), or other peripheral devices. Furthermore, computing system 1100 may include a graphics processing unit 1122, a video processing unit 1128 and an audio processing unit 1132. In another implementation, the computing system 1100 may include a chipset (not illustrated), which refers to a group of integrated circuits, or chips, that are designed to work with the processing device 1102 and controls communications between the processing device 1102 and external devices. For example, the chipset may be a set of chips on a motherboard that links the processing device 1102 to very high-speed devices, such as main memory 1104 and graphic controllers, as well as linking the processing device 1102 to lower-speed peripheral buses of peripherals, such as USB, PCI or ISA buses.

The data storage device 1116 may include a computer-readable storage medium 1124 on which is stored software 1126 embodying any one or more of the methodologies of functions described herein. The software 1126 may also reside, completely or at least partially, within the main memory 1104 as instructions 1126 and/or within the processing device 1102 as processing logic during execution thereof by the computing system 1100; the main memory 1104 and the processing device 1102 also constituting computer-readable storage media.

The computer-readable storage medium 1124 may also be used to store instructions 1126 utilizing the processing device 1102, and/or a software library containing methods that call the above applications. While the computer-readable storage medium 1124 is shown in an example implementation to be a single medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instruction for execution by the machine and that cause the machine to perform any one or more of the methodologies of the disclosed implementations. The term "computer-readable storage medium" shall accordingly be taken to include, but not be limited to, solid-state memories, and optical and magnetic media.

The following examples pertain to further implementations.
Example 1 is processor comprising a processor core to execute an application; a key attribute table (KAT) register to store a plurality of key identifiers (KeyIDs) associated with the application, wherein a KeyID of the plurality of KeyIDs identifies an encryption key; a selection circuit coupled to the KAT register, the selection circuit to select the KeyID from the KAT register based on a KeyID selector (KSEL), wherein the KSEL is associated with a block of memory to which access is performed; a cache coupled to the processor core, the cache to store a physical address, data, and the KeyID of the block of memory on which access has been performed, wherein the KeyID is an attribute associated with the block of memory; and a memory controller coupled to the cache to encrypt, based on the encryption key identified by the KeyID, the data of the block of memory stored in the cache as it is evicted from the cache to main memory.
In Example 2, the subject matter of Example 1, wherein the processor core executes one or more logical processers each associated with one of one or more KAT registers, and wherein a logical processor of the one or more logical processors is to load the plurality of KeyIDs into the KAT register upon activation of the virtual machine on a logical processor associated with the KAT register.
In Example 3, the subject matter of any one of Examples 1-2, further comprising an encryption key cache coupled to the memory controller, the encryption key cache to store encryption keys associated with active KeyIDs, wherein the processor core is to offload encryption keys associated with inactive KeyIDs from the encryption key cache to a reserved region of main memory, and wherein the encryption keys are encrypted by the memory controller upon being offloaded to the reserved region of main memory.
In Example 4, the subject matter of any one of Examples 1-3, wherein the cache comprises a data cache to store the data of the block of memory; and a KeyID cache to store the KeyID of the block of memory.
In Example 5, the subject matter of any one of Examples 1-4, further comprising a first memory device operatively coupled to a first logical processor, wherein the KeyID cache resides on the first memory device; and a second memory device operatively coupled to a second logical processor and the first memory device, wherein a second KeyID cache resides on the second memory device.
In Example 6, the subject matter of any one of Examples 1-5, wherein the KSEL is embedded in a linear address comprising a pointer to the physical address of the block of memory.
In Example 7, the subject matter of any one of Examples 1-6, wherein the KSEL is stored in a page table as an attribute associated with a physical page of memory, wherein the block of memory resides within the physical page of memory, and wherein the physical address of the physical page of memory is determined from a linear address provided by the application.
In Example 8, the subject matter of any one of Examples 1-7, wherein the memory controller comprises a total memory encryption engine.
Example 9 is a system comprising main memory; a processor coupled to the main memory, wherein the processor comprises: a processor core to execute an application; a key attribute table (KAT) register to store a plurality of key identifiers (KeyIDs) associated with the application, wherein a KeyID of the plurality of KeyIDs identifies an encryption key; a selection circuit coupled to the KAT register, the selection circuit to select the KeyID from the KAT register based on a KeyID selector (KSEL), wherein the KSEL is associated with a page of memory to which access is performed; a cache coupled to the processor core, the cache to store a physical address, data, and the KeyID of the page of memory on which access has been performed, wherein the KeyID is an attribute associated with the page of memory; and a memory controller, the memory controller to encrypt the memory page as the memory page is evicted from the system to main memory using the encryption key identified by the KeyID.
In Example 10, the subject matter of Example 9, wherein the processor is a multi-core processor, the multi-core processor further comprising: a second processor core to execute a second application; a second KAT register to store a second plurality of KeyIDs associated with the second application, wherein a second KeyID of the second plurality of KeyIDs identifies a second encryption key; a second selection circuit coupled to the second KAT register, the second selection circuit to select the second KeyID from the second KAT register based on a second KSEL, wherein the second KSEL is associated with a second page of memory to which access is performed; and a second cache coupled to the second processor core, the second cache to store a second physical address, data, and the second KeyID of the second page of memory on which access has been performed, wherein the second KeyID is an attribute associated with the second page of memory.
In Example 11, the subject matter of any one of Examples 9-10, wherein the plurality of KeyIDs are loaded into the KAT register upon activation of the application on the processor core and the second plurality of KeyIDs are loaded into the second KAT register upon activation of the second application on the second processor core.
In Example 12, the subject matter of any one of Examples 9-11, further comprising a mode selection multiplexor to select a legacy mode or a scalable multi-key encryption mode, and wherein the memory controller resides on the processor.
In Example 13, the subject matter of any one of Examples 9-12, further comprising: an encryption key cache coupled to the memory controller, the encryption key cache to store encryption keys associated with active KeyIDs, wherein the processor core is to offload encryption keys associated with inactive KeyIDs from the encryption key cache to a reserved region of system memory, and wherein the encryption keys are encrypted by the memory controller upon being offloaded to the reserved region of system memory.
In Example 14, the subject matter of any one of Examples 9-13, wherein the encryption key cache is managed by hardware to offload inactive encryption keys to the reserved region and load from system memory encryption keys associated with KeyIDs loaded in the KAT register.
In Example 15, the subject matter of any one of Examples 9-14, wherein the encryption key cache is managed by software that loads and offloads encryption keys based on usage of the encryption keys.
Example 16 is a method comprising loading a key attribute table (KAT) register with one or more key identifiers (KeyIDs) that identify encryption keys to encrypt memory used by an application, wherein the one or more KeyIDs is a subset of all KeyIDs accessible by a system; requesting, by a processing device, a block of memory to be used by the application; selecting, from the KAT register, a KeyID associated with a memory request, wherein the KeyID is selected from the KAT register using a selection circuit and a key identifier selector (KSEL); and storing the KeyID in a KeyID cache (KIC), the KIC to store KeyIDs for each block of memory cached by the system.
In Example 17, the subject matter of Example 16, further comprising: determining, based on the physical address of the block of memory, that the block of memory is cached by the system; determining that the block of memory cached by the system is not associated with the KeyID selected from the KAT register; evicting the block of memory from the cache; and retrieving the block of memory from main memory, caching the block of memory, and storing the KeyID selected from the KAT register in the KIC as associated with the block of memory.
In Example 18, the subject matter of any one of Examples 16-17, further comprising: determining, based on the physical address of the block of memory, that the block of memory is cached by the system; determining that the block of memory cached by the system is associated with the KeyID selected from the KAT register; and completing the memory request by retrieving the block of memory cached by the system.
In Example 19, the subject matter of any one of Examples 16-18, further comprising: offloading encryption keys, from an encryption key cache, associated with inactive KeyIDs to a reserved region of main memory; and encrypting the encryption keys upon offloading the encryption keys to the reserved region of main memory.
In Example 20, the subject matter of any one of Examples 16-19, wherein the application is a virtual machine.
Example 21 is an apparatus comprising means to perform a method of any one of Examples 16-20.
Example 22 is at least one machine readable medium comprising a plurality of instructions, when executed, to implement a method or realize an apparatus of any one of Examples 16-20.
Example 23 is an apparatus comprising a processor configured to perform the method of any one of Examples 16-20.

While the disclosure has been described with respect to a limited number of implementations, those skilled in the art will appreciate numerous modifications and variations therefrom. It is intended that the appended claims cover all such modifications and variations as fall within the true spirit and scope of this disclosure.

In the description herein, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation etc. in order to provide a thorough understanding of the disclosure. It will be apparent, however, to one skilled in the art that these specific details need not be employed to practice the disclosure. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic and other specific operational details of a computer system have not been described in detail in order to avoid unnecessarily obscuring the disclosure.

The implementations are described with reference to determining validity of data in cache lines of a sector-based cache in specific integrated circuits, such as in computing platforms or microprocessors. The implementations may also be applicable to other types of integrated circuits and programmable logic devices. For example, the disclosed implementations are not limited to desktop computer systems or portable computers, such as the Intel® Ultrabooks™ computers. And may be also used in other devices, such as handheld devices, tablets, other thin notebooks, systems on a chip (SoC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that can perform the functions and operations taught below. It is described that the system can be any kind of computer or embedded system. The disclosed implementations may especially be used for low-end devices, like wearable devices (e.g., watches), electronic implants, sensory and control infrastructure devices, controllers, supervisory control and data acquisition (SCADA) systems, or the like. Moreover, the apparatuses, methods, and systems described herein are not limited to physical computing devices, but may also relate to software optimizations for energy conservation and efficiency. As will become readily apparent in the description below, the implementations of methods, apparatuses, and systems described herein (whether in reference to hardware, firmware, software, or a combination thereof) are vital to a 'green technology' future balanced with performance considerations.

Although the implementations herein are described with reference to a processor, other implementations are applicable to other types of integrated circuits and logic devices. Similar techniques and teachings of implementations of the disclosure can be applied to other types of circuits or semiconductor devices that can benefit from higher pipeline throughput and improved performance. The teachings of implementations of the disclosure are applicable to any processor or machine that performs data manipulations. However, the disclosure is not limited to processors or machines that perform 512 bit, 256 bit, 128 bit, 64 bit, 32 bit, or 16 bit data operations and can be applied to any processor and machine in which manipulation or management of data is performed. In addition, the description herein provides examples, and the accompanying drawings show various examples for the purposes of illustration. However, these examples should not be construed in a limiting sense as they are merely intended to provide examples of implementations of the disclosure rather than to provide an exhaustive list of all possible implementations of implementations of the disclosure.

Although the above examples describe instruction handling and distribution in the context of execution units and logic circuits, other implementations of the disclosure can be accomplished by way of a data or instructions stored on a machine-readable, tangible medium, which when performed by a machine cause the machine to perform functions consistent with at least one implementation of the disclosure. In one implementation, functions associated with implementations of the disclosure are embodied in machine-executable instructions. The instructions can be used to cause a general-purpose or special-purpose processor that is programmed with the instructions to perform the steps of the disclosure. Implementations of the disclosure may be provided as a computer program product or software which may include a machine or computer-readable medium having stored thereon instructions which may be used to program a computer (or other electronic devices) to perform one or more operations according to implementations of the disclosure. Alternatively, operations of implementations of the disclosure might be performed by specific hardware components that contain fixed-function logic for performing the operations, or by any combination of programmed computer components and fixed-function hardware components.

Instructions used to program logic to perform implementations of the disclosure can be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of implementations of the disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one implementation, refers to the hardware, which is specifically configured to recognize and/or execute the code to be held on a non-transitory medium. Furthermore, in another implementation, use of a module refers to the non-transitory medium including the code, which is specifically adapted to be executed by the microcontroller to perform predetermined operations. And as can be inferred, in yet another implementation, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one implementation, use of the term logic includes hardware, such as transistors, registers, or other hardware, such as programmable logic devices.

Use of the phrase 'configured to,' in one implementation, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' 'capable of/to,' and/or 'operable to,' in one implementation, refers to some apparatus, logic, hardware, and/or element designed in such a way to enable use of the apparatus, logic, hardware, and/or element in a specified manner. Note as above that use of 'to,' 'capable to,' or 'operable to,' in one implementation, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one implementation, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one implementation, refer to a default and an updated value or state, respectively. For example, a default value potentially includes a high logical value, i.e. reset, while an updated value potentially includes a low logical value, i.e. set. Note that any combination of values may be utilized to represent any number of states.

The implementations of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform implementations of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer)

Reference throughout this specification to "one implementation" or "an implementation" means that a particular feature, structure, or characteristic described in connection with the implementation is included in at least one implementation of the disclosure. Thus, the appearances of the phrases "in one implementation" or "in an implementation" in various places throughout this specification are not necessarily all referring to the same implementation. Furthermore, the particular features, structures, or characteristics may be combined in any suitable manner in one or more implementations.

In the foregoing specification, a detailed description has been given with reference to specific exemplary implementations. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of implementation and other exemplarily language does not necessarily refer to the same implementation or the same example, but may refer to different and distinct implementations, as well as potentially the same implementation.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is, here and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared and otherwise manipulated. It has proven convenient at times, principally for reasons of common usage, to refer to these signals as bits, values, elements, symbols, characters, terms, numbers or the like. The blocks described herein can be hardware, software, firmware or a combination thereof.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "defining," "receiving," "determining," "issuing," "linking," "associating," "obtaining," "authenticating," "prohibiting," "executing," "requesting," "communicating," or the like, refer to the actions and processes of a computing system, or similar electronic computing device, that manipulates and transforms data represented as physical (e.g., electronic) quantities within the computing system's registers and memories into other data similarly represented as physical quantities within the computing system memories or registers or other such information storage, transmission or display devices.

The words "example" or "exemplary" are used herein to mean serving as an example, instance or illustration. Any aspect or design described herein as "example' or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" or "an implementation" or "one implementation" throughout is not intended to mean the same implementation or implementation unless described as such. Also, the terms "first," "second," "third," "fourth," etc. as used herein are meant as labels to distinguish among different elements and may not necessarily have an ordinal meaning according to their numerical designation.

## Claims

1. A processor comprising:
a processor core to execute an application;
a key attribute table (KAT) register to store a plurality of key identifiers (KeyIDs) associated with the application, wherein a KeyID of the plurality of KeyIDs identifies an encryption key;
a selection circuit coupled to the KAT register, the selection circuit to select the KeyID from the KAT register based on a KeyID selector (KSEL), wherein the KSEL is associated with a block of memory to which access is performed;
a cache coupled to the processor core, the cache to store a physical address, data, and the KeyID of the block of memory on which access has been performed, wherein the KeyID is an attribute associated with the block of memory; and
a memory controller coupled to the cache to encrypt, based on the encryption key identified by the KeyID, the data of the block of memory stored in the cache as it is evicted from the cache to main memory.

2. The processor of claim 1, wherein the processor core executes one or more logical processers each associated with one of one or more KAT registers, and wherein a logical processor of the one or more logical processors is to load the plurality of KeyIDs into the KAT register upon activation of the application on a logical processor associated with the KAT register.

3. The processor of claim 1 further comprising:
an encryption key cache coupled to the memory controller, the encryption key cache to store encryption keys associated with active KeyIDs, wherein the processor core is to offload encryption keys associated with inactive KeyIDs from the encryption key cache to a reserved region of main memory, and wherein the encryption keys are encrypted by the memory controller upon being offloaded to the reserved region of main memory.

4. The processor of claim 1 wherein the cache comprises:
a data cache to store the data of the block of memory; and
a KeyID cache to store the KeyID of the block of memory.

5. The processor of claim 4 further comprising:
a first memory device operatively coupled to a first logical processor, wherein the KeyID cache resides on the first memory device; and
a second memory device operatively coupled to a second logical processor and the first memory device, wherein a second KeyID cache resides on the second memory device.

6. The processor of claim 1 wherein the KSEL is embedded in a linear address comprising a pointer to the physical address of the block of memory.

7. The processor of claim 1 wherein the KSEL is stored in a page table as an attribute associated with a physical page of memory, wherein the block of memory resides within the physical page of memory, and wherein the physical address of the physical page of memory is determined from a linear address provided by the application.

8. The processor of claim 1 wherein the memory controller comprises a total memory encryption engine.

9. A method of operation comprising:
loading a key attribute table (KAT) register with one or more key identifiers (KeyIDs) that identify encryption keys to encrypt memory used by an application, wherein the one or more KeyIDs is a subset of all KeyIDs accessible by a system;
requesting, by a processing device, a block of memory to be used by the application;
selecting, from the KAT register, a KeyID associated with a memory request, wherein the KeyID is selected from the KAT register using a selection circuit and a key identifier selector (KSEL); and
storing the KeyID in a KeyID cache (KIC), the KIC to store KeyIDs for each block of memory cached by the system.

10. The method of claim 9 further comprising:
determining, based on a physical address of the block of memory, that the block of memory is cached by the system;
determining that the block of memory cached by the system is not associated with the KeyID selected from the KAT register;
evicting the block of memory from the cache; and
retrieving the block of memory from main memory, caching the block of memory, and storing the KeyID selected from the KAT register in the KIC as associated with the block of memory.

11. The method of claim 9 further comprising:
determining, based on a physical address of the block of memory, that the block of memory is cached by the system;
determining that the block of memory cached by the system is associated with the KeyID selected from the KAT register; and
completing the memory request by retrieving the block of memory cached by the system.

12. The method of claim 9 further comprising:
offloading encryption keys, from an encryption key cache, associated with inactive KeyIDs to a reserved region of main memory; and
encrypting the encryption keys upon offloading the encryption keys to the reserved region of main memory.

13. The method of claim 9 wherein the application is a virtual machine.

14. An apparatus comprising: means for performing the methods of any one of claims 9-13.

15. A machine readable storage medium with instructions stored thereon to perform operations comprising:
loading a key attribute table (KAT) register with one or more key identifiers (KeyIDs) that identify encryption keys to encrypt memory used by an application, wherein the one or more KeyIDs is a subset of all KeyIDs accessible by a system;
requesting, by a processing device, a block of memory to be used by the application;
selecting, from the KAT register, a KeyID associated with a memory request, wherein the KeyID is selected from the KAT register using a selection circuit and a key identifier selector (KSEL); and
storing the KeyID in a KeyID cache (KIC), the KIC to store KeyIDs for each block of memory cached by the system.
